(19) Europäisches Patentamt
European Patent Office
Office européen des brevets

(11) **EP 2 840 790 A1**

(12) **EUROPEAN PATENT APPLICATION**
published in accordance with Art. 153(4) EPC

(43) Date of publication:
**25.02.2015 Bulletin 2015/09**

(51) Int Cl.:
***H04N 7/26*** *(0000.00)*

(21) Application number: **13778608.3**

(22) Date of filing: **16.04.2013**

(86) International application number:
**PCT/KR2013/003195**

(87) International publication number:
**WO 2013/157820 (24.10.2013 Gazette 2013/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.04.2012 US 201261624464 P**

(71) Applicant: **Samsung Electronics Co., Ltd.**
**Suwon-si, Gyeonggi-do 443-742 (KR)**

(72) Inventors:
• **KIM, Chan-yul**
**Bucheon-si**
**Gyeonggi-do 421-170 (KR)**
• **CHOI, Woong-il**
**Osan-si**
**Gyeonggi-do 447-772 (KR)**
• **KIM, Jae-hyun**
**Seoul 137-040 (KR)**
• **PARK, Jeong-hoon**
**Seoul 151-050 (KR)**

(74) Representative: **Instone, Terry**
**Appleyard Lees**
**15 Clare Road**
**Halifax HX1 2HY (GB)**

(54) **VIDEO CODING METHOD AND DEVICE USING HIGH-SPEED EDGE DETECTION, AND RELATED VIDEO DECODING METHOD AND DEVICE**

(57)     A video encoding method and apparatus using fast edge detection for determining a split shape of a picture is disclosed. A split shape of coding units having a tree structure is obtained by replacing a sampling unit having a predetermined size with one of an edge pixel and a normal pixel based on a maximum high frequency component obtained through orthogonal transformation on the sampling unit and obtaining a down-sampled picture, and repeatedly performing a process of splitting the down-sampled picture into the coding units and splitting the coding unit into lower coding units according to whether the edge pixel is present in the coding unit.

## FIG. 1A

**Description**

TECHNICAL FIELD

The present invention relates to video encoding and decoding, and more particularly to, methods and apparatuses for determining a split shape of a picture through preprocessing of video in advance and encoding and decoding the video based on the determined split shape of the picture.

BACKGROUND ART

As hardware capable of reproducing and storing high-resolution or high-quality video content has been developed and distributed, the need for a video codec capable of effectively encoding or decoding high-resolution or high-quality video content has increased. An existing video codec encodes a video according to a limited encoding method based on a macroblock having a predetermined size. Also, the existing video codec encodes/decodes video data by raster-scanning the macroblock.

DETAILED DESCRIPTION OF THE INVENTION

TECHNICAL PROBLEM

The present invention provides determining a split shape of an input picture using coding units having a tree structure in advance through preprocessing performed on the picture by not determining a coding unit of the picture having a variable size through rate-distortion optimization.

TECHNICAL SOLUTION

According to embodiments of the present invention, orthogonal transformation is used to generate a down-sampled picture including normal pixels and edge pixels, and a picture splits into a coding unit having a tree structure based on the edge pixels distributed in the down-sampled picture.

ADVANTAGEOUS EFFECTS

According to the embodiments of the present invention, a split structure of an input picture may be determined without a repetitive operation process for determining a size and structure of a variable coding unit, thereby reducing an operation amount taken to perform a process of determining the split structure of the picture and improving an encoding processing speed of an image according to the embodiments of the present invention.

DESCRIPTION OF THE DRAWINGS

FIG. 1 is a block diagram of a video encoding apparatus according to an embodiment of the present invention;
FIG. 2A is a diagram of an example of an orthogonal transformation process performed on a sampling unit according to an embodiment of the present invention;
FIG. 2B is a diagram of an example of an orthogonal transformation process on sampling units of a current picture and a previous picture for down-sampling according to another embodiment of the present invention;
FIG. 3A is a reference diagram for explaining a process of determining a split shape of a coding unit from a down-sampled picture according to an embodiment of the present invention;
FIG. 3B is a diagram of an example of determining a split shape of a maximum coding unit of an original picture based on a split shape of a maximum coding unit of a down-sampled picture according to an embodiment of the present invention;
FIG. 4 illustrates an example of a picture splitting process according to an embodiment of the present invention;
FIG. 5 is a block diagram of an image encoding apparatus corresponding to an image encoder of FIG. 1 according to an embodiment of the present invention;
FIG. 6 is a diagram illustrating deeper coding units according to depths and a partition, according to an embodiment of the present invention;
FIG. 7 is a diagram for describing a relationship between a coding unit and transformation units, according to an embodiment of the present invention;

FIG. 8 is a diagram for describing encoding information of coding units corresponding to a coded depth, according to an embodiment of the present invention;

FIG. 9 is a diagram of deeper coding units according to depths according to an embodiment of the present invention;

FIGS. 10 through 12 are diagrams for describing a relationship between coding units, prediction units, and transformation units, according to an embodiment of the present invention;

FIG. 13 is a flowchart illustrating a video encoding method, according to an embodiment of the present invention;

FIG. 14 is a block diagram of a video decoding apparatus according to an embodiment of the present invention;

FIG. 15 is a block diagram of a video decoding apparatus corresponding to an image decoder of FIG. 14 according to an embodiment of the present invention; and

FIG. 16 is a flowchart illustrating a video decoding method, according to an embodiment of the present invention.

## BEST MODE

According to an aspect of the present invention, there is provided a video encoding method comprising: obtaining sampling units having a predetermined size from a picture; performing orthogonal transformation on each sampling unit and transforming each sampling unit into an orthogonal component and a high frequency component; performing down-sampling on the picture by replacing each sampling unit with one of an edge pixel and a normal pixel based on the high frequency component; splitting the down-sampled picture into coding units having a predetermined size; determining a split shape of the coding unit by repeatedly performing a process of splitting the coding unit into lower coding units according to whether the edge pixel is included in the coding unit; and splitting the picture into coding units having a tree structure based on the split shape of the coding unit included in the down-sampled picture, and encoding the picture based on the split coding units having the tree structure.

According to another aspect of the present invention, there is provided a video encoding apparatus comprising: an orthogonal transformer for obtaining sampling units having a predetermined size from a picture, performing orthogonal transformation on each sampling unit, and transforming each sampling unit into an orthogonal component and a high frequency component; a down-sampler for performing down-sampling on the picture by replacing each sampling unit with one of an edge pixel and a normal pixel based on the high frequency component; a split shape determiner for splitting the down-sampled picture into coding units having a predetermined size, and determining a split shape of the coding unit by repeatedly performing a process of splitting the coding unit into lower coding units according to whether the edge pixel is included in the coding unit; and an image encoder for splitting the picture into coding units having a tree structure based on the split shape of the coding unit included in the down-sampled picture, and encoding the picture based on the split coding units having the tree structure.

According to another aspect of the present invention, there is provided a video decoding method comprising: receiving and parsing a bitstream with respect to an encoded video; extracting a size of a coding unit that is a data unit for decoding a picture of the video, information about a split shape of the coding unit, and prediction mode information from the bitstream; and splitting the coding unit into coding unit having a tree structure based on the size of the coding unit and the split shape and performing prediction decoding on the picture according to a prediction mode of the coding units having the tree structure, wherein the split shape of the coding units having the tree structure is obtained by replacing a sampling unit having a predetermined size with one of an edge pixel and a normal pixel based on a maximum high frequency component obtained through orthogonal transformation on the sampling unit and obtaining a down-sampled picture, and repeatedly performing a process of splitting the down-sampled picture into the coding units and splitting the coding unit into lower coding units according to whether the edge pixel is present in the coding unit.

According to another aspect of the present invention, there is provided a video decoding apparatus comprising: a receiver for receiving and parsing a bitstream with respect to an encoded video; an extractor for extracting a size of a coding unit that is a data unit for decoding a picture of the video, information about a split shape of the coding unit, and prediction mode information from the bitstream; and an image decoder for splitting the coding unit into coding unit having a tree structure based on the size of the coding unit and the split shape and performing prediction decoding on the picture according to a prediction mode of the coding units having the tree structure, wherein the split shape of the coding units having the tree structure is obtained by replacing a sampling unit having a predetermined size with one of an edge pixel and a normal pixel based on a maximum high frequency component obtained through orthogonal transformation on the sampling unit and obtaining a down-sampled picture, and repeatedly performing a process of splitting the down-sampled picture into the coding units and splitting the coding unit into lower coding units according to whether the edge pixel is present in the coding unit.

## MODE OF THE INVENTION

Embodiments of the present invention will now be described in detail with reference to the accompanying drawings below.

Most video encoding apparatuses use a motion prediction and compensation method to remove redundancy of a temporal direction. Image compression using a motion vector is used to implement high compressibility by transmitting the motion vector instead of transmitting a current image. An actual image may include a plurality of objects that may have various motions. Thus, a block-based motion prediction and compensation method of splitting an image into blocks and searching for and transmitting motion vectors of split blocks is widely used. The block-based motion prediction and compensation method splits an input image into block units and expresses and compensates for a motion of each block as a 2D motion vector. A conventional codec such as H.264/AVC splits an image into blocks each having a variable size from 16x16 to 4x4 and performs motion compensation. Motion compensation based on the block having the variable size reflects a characteristic of an image well, thereby increasing encoding efficiency while requiring a high complexity at the same time.

H.264/AVC intra prediction splits an image into blocks having various sizes of 16x16, 8x8, 4x4, etc. and performs prediction by using peripheral reference pixels. H.264/AVC inter prediction splits an image into blocks having various sizes of 16x16, 16x8, 8x16, 8x8, 8x4, 4x8, 4x4, etc. and performs prediction and compensation by using a previously encoded reference image. To select a mode having the highest coding efficiency between an inter mode and an intra mode, H.264/AVC uses a cost function based on the Lagrangian function. As an example, the rate-distortion function is used as the cost function.

In H.264/AVC, a size of a basic coding unit is a macroblock having a size of 16x16, which is too small to apply a high quality video such as ultra high definition (UHD), and thus it is insufficient. Thus, the Joint Collaborative Team on Video Coding (JCT-VC) commonly established by Moving Picture Experts Group (MPEG) and Video Coding Experts Group (VCEG) is proceeding standardization of a video codec that is High Efficiency Video Coding (HEVC) for standardization technology development more efficient than a conventional video codec.

HEVC uses a block in a rectangular shape as a basic encoding unit similarly to the conventional H.264/AVC. HEVC is not limited to the conventional 16x16 macroblock and may encode an image by using a block having sizes of 32x32, 64x64, etc. To variably adjust a size of an encoding unit without restriction to a size, a depth indicating a split number of a largest coding unit and a maximum coding unit is used. The maximum coding unit is called a coding tree block. The maximum coding unit may not be encoded by overlapping with each other. A coding unit included in a single maximum coding unit is split into a tree structure and encoded. HEVC also determines a split shape and prediction mode of the maximum coding unit based on the rate-distortion function.

As described above, a video codec mostly splits an image into blocks having a predetermined size and determines a split shape and prediction mode of a block of which rate-distortion is optimized. Although the smaller the size of the block for motion prediction and compensation, the more accurate the prediction may be possible, an information amount of a motion vector that is to be encoded for each block increases, and thus encoding efficiency deteriorates. To determine the split shape of the block of which rate-distortion is optimized, a process of encoding an image with respect to all available variable block sizes and comparing a rate-distortion according to variable block sizes is necessary, and thus a great amount of operation is required to determine an optimal split shape of the image. In particular, when a coding unit having a very large size such as HEVC and a small coding unit such as 4x4 are available, an operation amount for calculating the rate-distortion greatly increases.

Therefore, the present invention provides a method of determining a split shape of an image through pre-processing of image encoding instead of determining the split shape of the image by calculating a rate-distortion according to the split shape of the image.

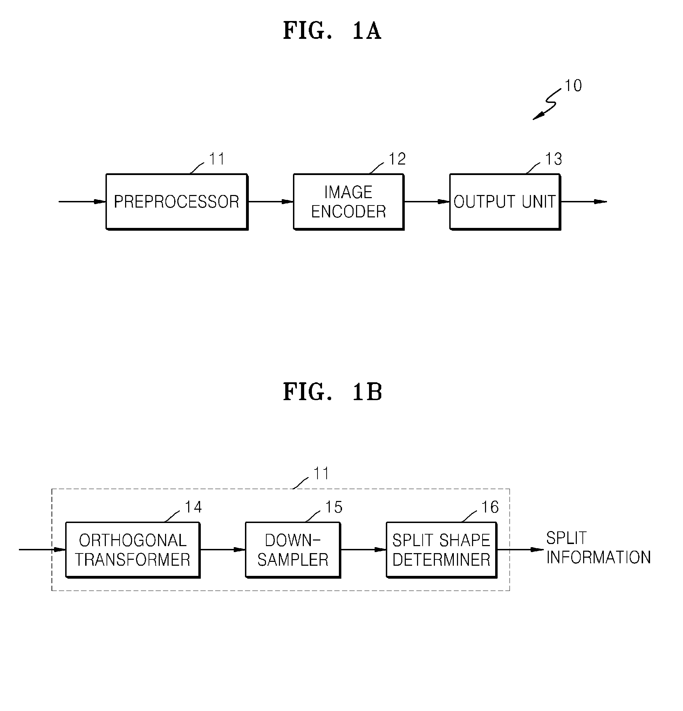

FIG. 1A is a block diagram of a video encoding apparatus 10 according to an embodiment of the present invention.

Referring to FIG. 1A, the video encoding apparatus 10 includes a preprocessor 11, an image encoder 12, and an output unit 13.

The preprocessor 11 splits a picture based on a maximum coding unit that is a coding unit having a maximum size and determines a split shape of the maximum coding unit. In particular, the preprocessor 11 does not determine the split shape of the maximum coding unit by using a rate-distortion optimization method but performs orthogonal transformation on the picture in a predetermined sampling unit, performs down-sampling on the picture by replacing the sampling unit with a normal pixel or an edge pixel, splits the maximum coding unit into smaller lower coding units according to a location of the edge pixel in the down-sampled picture, and determines a split shape of the down-sampled picture. A process of determining the split shape of the picture of the preprocessor 11 will be described in more detail later.

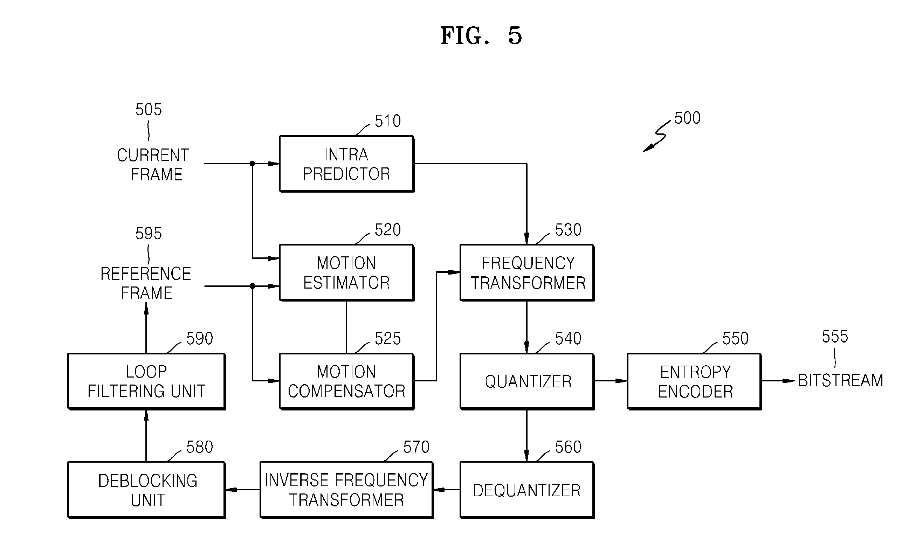

The image encoder 12 performs prediction encoding on coding units included in the maximum coding unit based on the split shape of the maximum coding unit determined by the preprocessor 11. The image encoder 12 may perform encoding on the coding unit determined by the preprocessor 11 in a prediction unit or may perform prediction encoding on the coding units determined by the preprocessor 11 by splitting the coding units into smaller partitions for prediction again. An operation of the image encoder 12 will be described with reference to FIG. 5 later.

The output unit 13 outputs information regarding the split shape of the maximum coding unit determined by the preprocessor 11 and encoded image data of the maximum coding unit determined by the image encoder 12 and encoding information such as a coding mode in a bitstream shape. The information regarding the split shape of the maximum coding unit may be split flag information indicating whether to split coding units according to depths. The output unit 13 may add coding unit structure information regarding sizes and variable depths defined according to pictures, slices, or groups of pictures (GOPs) to a bitstream.

A variable depth according to an embodiment may indicate a maximum depth allowed for coding units of a current tree structure as well as a lowest depth of a coding unit having a minimum size, the number of depth levels, or a change amount of a depth.

The number of depth levels according to an embodiment may indicate the number of depth levels of coding units according to depths that may be present in the coding units of the current tree structure. The change amount of the depth according to an embodiment that may be present in the coding units of the current tree structure may indicate a variable frequency of times of depth levels.

Information regarding the variable depth according to an embodiment may be set for each sequence, picture, slice, or GOP. That is, for each sequence, picture, slice, or GOP, information regarding at least one of a maximum size and a minimum size of a coding unit allowable in the coding units of the current tree structure and the information regarding the variable depth may be set.

Encoding information output by the output unit 13 may be classified into encoding information of coding units according to depths and encoding information of a prediction unit. The encoding information of coding units according to depths may include prediction mode information and partition size information. The encoding information transmitted for each prediction unit may include information regarding an estimation direction of an inter mode, information regarding a reference image index of the inter mode, information regarding a motion vector, information regarding a color component of an intra mode, information regarding an interpolation method of the intra mode, etc. The encoding information output by the output unit 13 may include transformation indices. Transformation index information according to an embodiment may be information regarding a structure of a transformation unit used to transform a current coding unit. The transformation index information according to an embodiment may indicate whether the current transformation unit splits into a transformation unit of a lower level.

The output unit 13 may insert and output the information regarding the split shape of the maximum coding unit and information regarding the coding mode into encoded video data including a video parameter set (VPS), a sequence parameter set (SPS), a picture parameter set (PPS), and an adaptation parameter set (APS) and a slice header.

FIG. 1B is a block diagram of a specific configuration of the preprocessor 11 of FIG. 1A according to an embodiment of the present invention.

Referring to FIG. 1B, the preprocessor 11 includes an orthogonal transformer 14, a down-sampler 15, and a split shape determiner 16.

The orthogonal transformer 14 obtains sampling units having a predetermined size from a picture, performs orthogonal transformation on each of the sampling units, and transforms each of the sampling units into orthogonal components and high frequency components. The orthogonal transformer 14 according to an embodiment may use the Hadamard transformation as orthogonal transformation. The Hadamard transformation is capable of fast processing as simple orthogonal transformation that uses only summation and subtraction. A case where the Hadamard transformation is used as orthogonal transformation will now be described below but is not limited thereto. Other orthogonal transformations may be used.

The down-sampler 15 performs down-sampling on the picture by replacing each of the sampling units with one of edge pixels and normal pixels based on the high frequency component. For example, when the orthogonal transformer 14 performs orthogonal transformation on a sampling unit having a size of 2x2, the down-sampler 15 compares a high frequency component in a maximum size included in the sampling units with a predetermined threshold, replaces the sampling unit having the size of 2x2 with a single normal pixel or edge pixel, thereby obtaining the down-sampled picture. If an original picture is NxM (N and M are integers), and a size of an orthogonally transformed sampling unit is n x m (n and m are integers), the down-sampler 15 replaces the sampling unit having a size of n x m with one normal pixel or edge pixel, thereby obtaining a down-sampled picture having a size of (N/m)x(M/m).

The split shape determiner 16 repeatedly performs a process of splitting the down-sampled picture into coding units having a predetermined size, for example, maximum coding units, and splitting the maximum coding unit into lower coding units according to whether an edge pixel is present in the maximum coding unit, thereby determining a split shape of the maximum coding unit.

As described above, the image encoder 12 of FIG. 1A determines a structure of coding units having a tree structure included in a maximum coding unit of a corresponding current picture, i.e. a split shape of the maximum coding unit, by using the split shape of the maximum coding unit included in the down-sampled picture determined by the split shape determiner 16. The image encoder 12 performs prediction encoding based on the coding units that are split from the maximum coding unit.

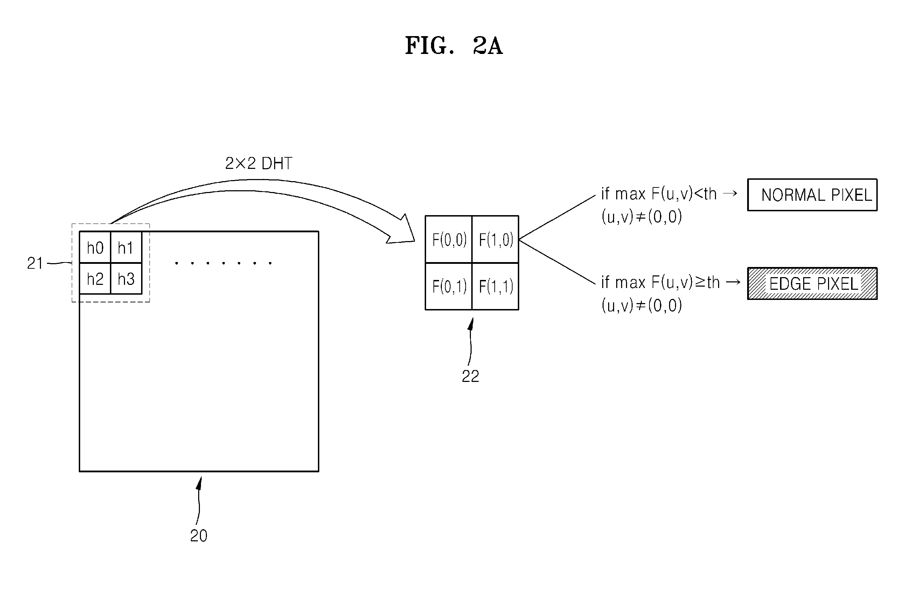

FIG. 2A is a diagram of an example of an orthogonal transformation process performed on a sampling unit according to an embodiment of the present invention.

Referring to FIGS. 1B and 2A, the orthogonal transformer 14 obtains the sampling unit 21 having a predetermined size from a current picture 20 that is to be encoded. FIG. 2A shows a case where a size of the sampling unit 21 is 2x2. The size of the sampling unit 21 is not limited thereto and may be changed. The orthogonal transformer 14 performs Hadamard transformation on the sampling unit 21 having the size of 2x2. If input signals included in the sampling unit 21 are h0, h1, h2, and h3, the orthogonal transformer 14 obtains an orthogonal component F(0,0) and high frequency components F(0,1), F(1,0), and F(1,1) from the input signals h0, h1, h2, and h3 through a Hadamard transformation formula such as the following algorithm:

```
{
F(0,0)=(h0+h1+h2+h3)/2
F(0,1)=(h0+h1-h2-h3)/2
F(1,0)=(h0-h1-h2+h3)/2
F(1,1)=(h0-h1+h2-h3)/2
}
```

The down-sampler 15 compares a maximum value of the high frequency components F(0,1), F(1,0), and F(1,1) among Hadamard transformed components 22 with a predetermined threshold th. The predetermined threshold th may use a value determined based on a quantization parameter QP. As an example, the predetermined threshold th may be determined based on the quantization parameter QP such as QP* $\alpha$ ($\alpha$ is a real number).

The down-sampler 15 compares an absolute value of the maximum value among the high frequency components with the threshold th and, if the absolute value is smaller than the threshold th, replaces the sampling unit 21 with a single normal pixel. The down-sampler 15 replaces the sampling unit 21 with a single edge pixel if the absolute value is equal to or greater than the threshold th. The sampling unit 21 replaced as the normal pixel may correspond to a region that is highly possible to be a flat region. The sampling unit 21 replaced as the edge pixel may include an edge or many motions and may be a region that is split for accurate motion prediction and compensation.

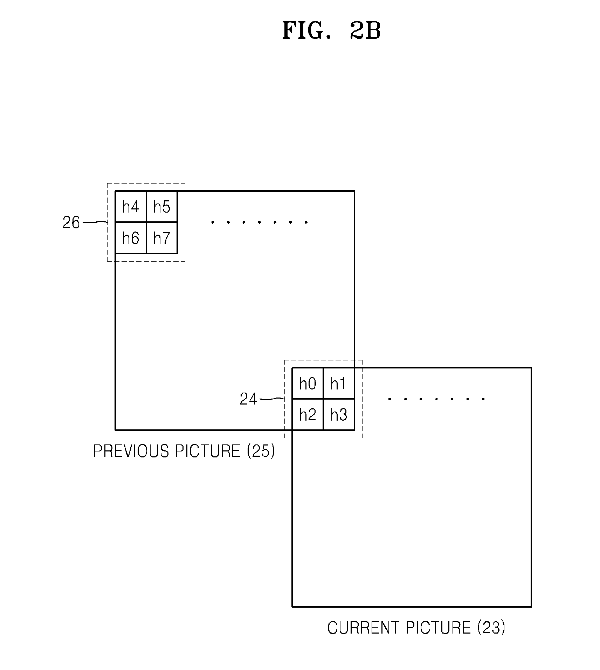

FIG. 2B is a diagram of an example of an orthogonal transformation process on sampling units 24 and 26, respectively, of a current picture 23 and a previous picture 25 for down-sampling according to another embodiment of the present invention.

The preprocessor 11 may compare a high frequency component obtained from the sampling unit 24 of the current picture 23 with a high frequency component obtained from the sampling unit 26 of the previous picture 25 and replace the sampling unit 24 of the current picture 23 with a normal pixel or an edge pixel.

In more detail, the orthogonal transformer 14 performs Hadamard transformation on the sampling unit 24 of the current picture 23 and obtains high frequency components. The orthogonal transformer 14 performs Hadamard transformation on the sampling unit 26 of the previous picture 25 and obtains high frequency components. The down-sampler 15 replaces the sampling unit 24 with a single normal pixel when a maximum value of absolute values of differences between the high frequency components obtained from the sampling unit 24 of the current picture 23 and the high frequency components obtained from the sampling unit 26 of the current picture 25 is smaller than the predetermined threshold th, and replaces the sampling unit 24 with a single edge pixel when the maximum value is greater than the predetermined threshold th. That is, if the high frequency component obtained by performing Hadamard transformation on the sampling unit 24 of the current picture 23 is $F(u,v)_t$ ((u,v) is one of (0,1),(1,0), and (1,1)), and the high frequency component obtained by performing Hadamard transformation on the sampling unit 26 of the current picture 25 is $F(u,v)_{t-1}$, when the following equation $\max_{(u,v) \neq 0} \mid F(u,v)_t - F(u,v)_{t-1} \mid \geq th$ is

satisfied, the down-sampler 15 replaces the sampling unit 24 of the current picture 23 with the edge pixel, and the

following equation $\max_{(u,v) \neq 0} \mid F(u,v)_t - F(u,v)_{t-1} \mid \geq th$ is satisfied, the down-sampler 15 replaces the sampling unit 24 of the current picture 23 with the normal pixel.

The preprocessor 11 performs sampling, orthogonal transformation, and down-sampling described above on all pixels included in a current picture. Thus, as described above, if the original picture is N x M (N and M are integers), and a size of an orthogonally transformed sampling unit is n x m (n and m are integers), a down-sampled picture of (N/m) x (M/m) is obtained. In a case where the sampling unit having the size of 2x2 as described above is based, a down-sampled picture of (N2/) x (M/2) is obtained. The down-sampled picture is a binary coded image having two types of pixels of the normal pixel and the edge pixel and is used to determine a split shape of a picture.

The split shape determiner 16 determines a split shape of the maximum coding unit by repeatedly performing a process of splitting the down-sampled picture into coding unit having a predetermined size, for example, the maximum coding unit and splitting the maximum coding unit into lower coding units according to whether the edge pixel is present in the maximum coding unit.

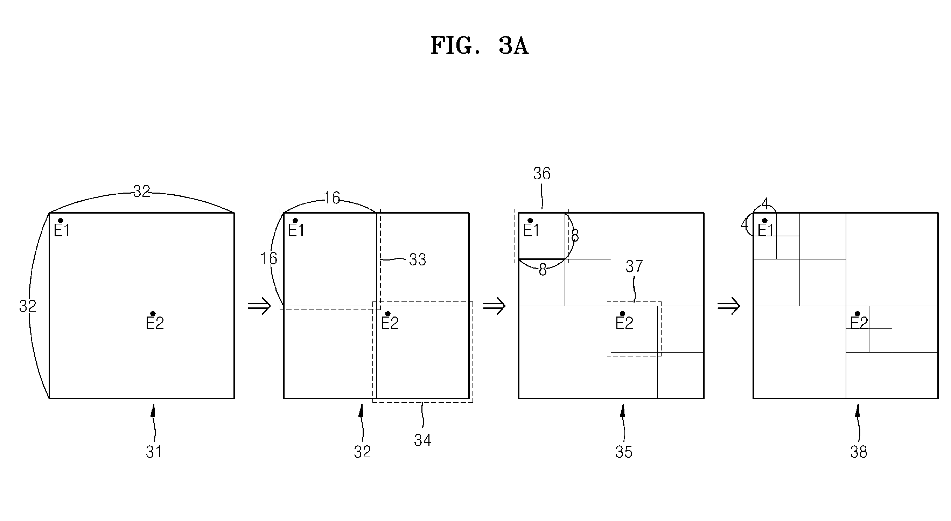

FIG. 3A is a reference diagram for explaining a process of determining a split shape of a coding unit from a down-sampled picture according to an embodiment of the present invention. FIG. 3A shows a process of splitting a single maximum coding unit into coding units having a tree structure when it is assumed that a down-sampled picture splits into coding units having a predetermined size, for example, maximum coding units. As an example, it is assumed that a size of the maximum coding unit available in the down-sampled picture is 32x32.

Referring to FIG. 3A, it is assumed that two edge pixels E1 and E2 are present in a maximum coding unit 31. The split shape determiner 16 splits the maximum coding unit 31 according to a previously determined split shape as long as an edge pixel is present in the initial maximum coding unit 31. The split shape determiner 16 splits a split coding unit into smaller lower coding units if the edge pixel is present in the corresponding coding unit. For example, since the edge pixels E1 and E2 are present in the maximum coding unit 31, the split shape determiner 16 splits the maximum coding unit 31 and determines a first split shape 32. The split shape determiner 16 splits first coding units 33 and 34 including the edge pixels E1 and E2 among lower first coding units included in the maximum coding unit 31 into 4 coding units and determines a second split shape 35. The split shape determiner 16 splits second coding units 36 and 37 including the edge pixels E1 and E2 among lower second coding units included in the maximum coding unit 31 into 4 coding units and determines a third split shape 38. Such a process of splitting a coding unit according to whether an edge pixel is present may be repeatedly performed until a lower coding unit including the edge pixel is a minimum coding unit. In FIG. 3A, if a size of the minimum coding unit is 4x4, the split shape of the maximum coding unit 31 may be finally determined as the third split shape 38.

If the split shape determiner 16 may determine the split shape of the maximum coding unit 31 included in the down-sampled picture based on the edge pixel, a split shape of a maximum coding unit of an original picture may be determined based on the determination.

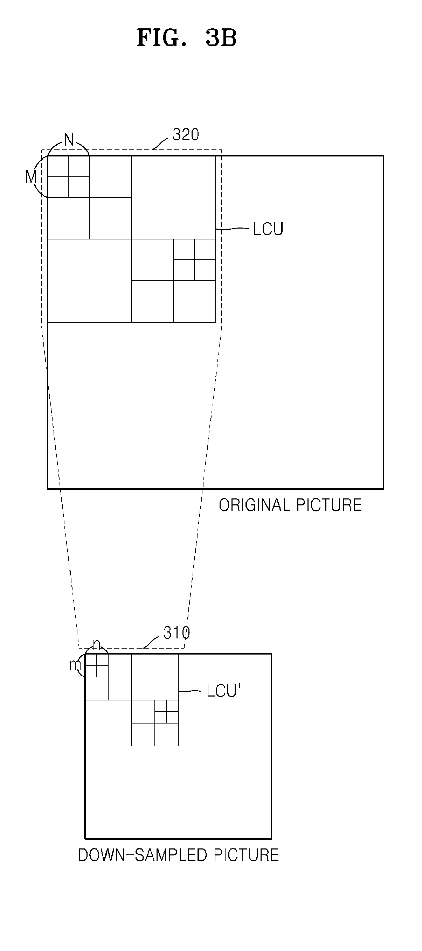

FIG. 3B is a diagram of an example of determining a split shape of a maximum coding unit 320 of an original picture based on a split shape of a maximum coding unit 310 of a down-sampled picture according to an embodiment of the present invention.

Referring to FIG. 3B, if the split shape of the maximum coding unit 310 included in the down-sampled picture is determined, the split shape determiner 16 may determine the split shape of the maximum coding unit 320 of the corresponding original picture in the same manner as described above. If a size of the maximum coding unit 310 of the down-sampled picture is n x m, and a size of the maximum coding unit 320 of the corresponding original picture is N x M, the split shape of the maximum coding unit 310 of the down-sampled picture may extend (N/n) in a horizontal direction and (M/m) in the vertical direction.

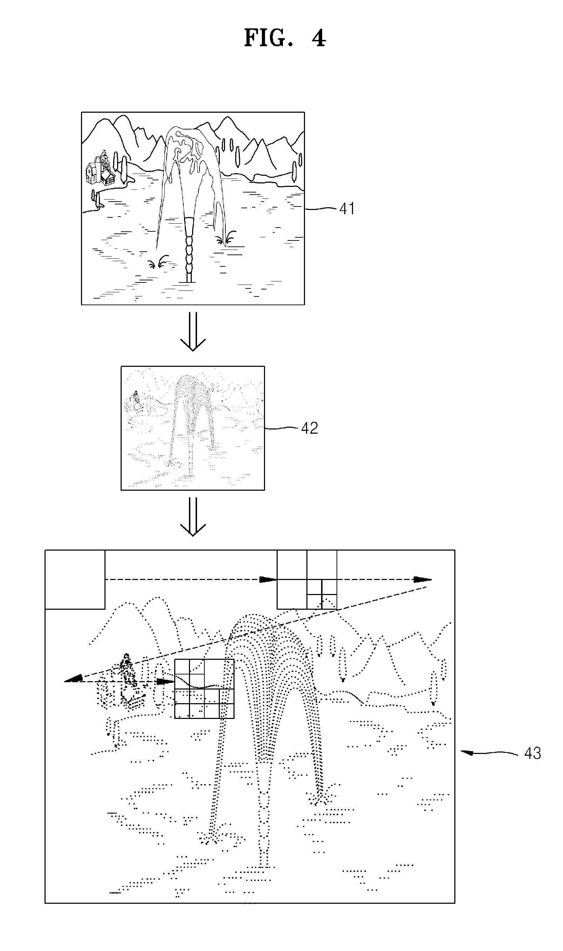

FIG. 4 illustrates an example of a picture splitting process according to an embodiment of the present invention.

Referring to FIG. 4, the orthogonal transformer 14 performs orthogonal transformation on sampling units obtained from an original picture 41, and the down-sampler 15 replaces the sampling units with normal pixels or edge pixels based on high frequency components obtained from the sampling units, thereby obtaining a down-sampled picture 42. The split shape determiner 16 splits a down-sampled picture 43 into maximum coding units having a maximum size, and determines a split shape of each of the maximum coding units according to a predetermined scanning order, for example, a raster scanning order. The split shape determiner 16 may determine the split shape of each of the maximum coding units by repeatedly performing a process of splitting the maximum coding units into lower coding units based on an edge pixel included in each of the maximum coding units and splitting the lower coding units into smaller lower coding units. An operation of splitting the maximum coding units into lower coding units may be repeatedly performed until the edge pixel is housed in a previously determined minimum coding unit. If a minimum coding unit available in an original picture is axb (a and b are integers) and a size of a sampling unit is nxm, a minimum coding unit available in a down-sampled picture is (a/n) x (b/m). The split shape determiner 16 may repeatedly perform the above-described splitting process until the edge pixel included in the down-sampled picture is included in the minimum coding unit having a size of (a/n) x (b/m). For example, when the minimum coding unit available in the original picture is 4x4 and the size of the sampling unit is 2x2, the split shape determiner 16 may repeatedly perform the above-described splitting process until the edge pixel included in the down-sampled picture is included in a coding unit having a size of 2x2.

Referring to FIG. 1A again, the image encoder 12 performs prediction encoding on the coding units included in the maximum coding unit based on the split shape of the maximum coding unit determined by the preprocessor 11. The image encoder 12 may perform encoding by using the coding units determined by the preprocessor 11 as a prediction unit and may perform prediction encoding by splitting the coding units determined by the preprocessor 11 into smaller partitions for prediction.

FIG. 5 is a block diagram of an image encoding apparatus 500 corresponding to the image encoder 12 of FIG. 1 according to an embodiment of the present invention.

Referring to FIG. 5, an intra predictor 510 performs intra prediction on split coding units from among a current frame 505, and a motion estimator 520 and a motion compensator 525 perform motion prediction and motion compensation on coding units.

A prediction value of each of the coding units output from the intra predictor 510 and the motion compensator 525 is output as a quantized transformation coefficient through a frequency transformer 530 and a quantizer 540. The quantized transformation coefficient is restored as data in a spatial domain through an inverse quantizer 560 and an inverse frequency transformer 570, and the restored data in the spatial domain is output as a reference frame 595 after being post-processed through a deblocking unit 580 and a loop filtering unit 590. The quantized transformation coefficient may be output as a bitstream 555 through an entropy encoder 550.

The intra predictor 510, the motion estimator 520, and the motion compensator 525 may determine partitions and a prediction mode of each coding unit from among the coding units having a tree structure, and the frequency transformer 530 may determine a size of a transformation unit in each coding unit.

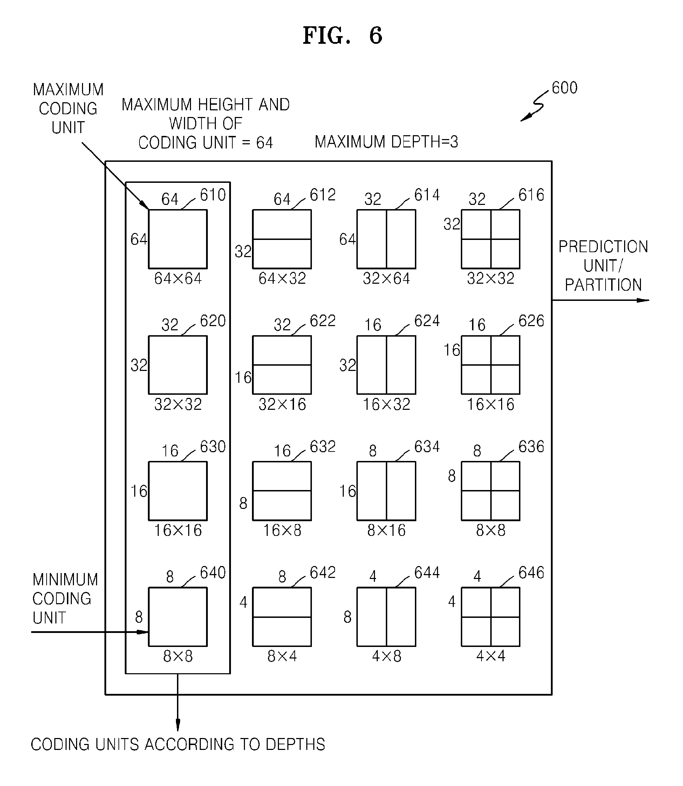

FIG. 6 is a diagram illustrating deeper coding units according to depths and a partition, according to an embodiment of the present invention.

The video encoding apparatus 10 according to an embodiment uses hierarchical coding units so as to consider characteristics of an image. A maximum height, a maximum width, and a maximum depth of coding units may be adaptively determined according to the characteristics of the image, or may be variously set by a user. As described above, the video encoding apparatus 10 according to an embodiment may determine sizes and split shapes of the coding units according to depths based on a split shape of a maximum coding unit determined based on an edge included in a down-sampled picture.

In a hierarchical structure 600 of coding units according to an embodiment, the maximum height and the maximum width of the coding units are each 64, and the maximum depth is 3. In this regard, the maximum depth indicates a total split frequency of times from a maximum coding unit to a minimum coding unit. Since a depth increases along a vertical axis of the hierarchical structure 600 of the coding units according to an embodiment, a height and a width of the deeper coding unit are each split. Also, a prediction unit and partitions, which are bases for prediction encoding of each deeper coding unit, are shown along a horizontal axis of the hierarchical structure 600 of the coding units.

In other words, a coding unit 610 is a maximum coding unit in the hierarchical structure 600 of the coding units, wherein a depth is 0 and a size, i.e., a height by width, is 64x64. The depth increases along the vertical axis, and a coding unit 620 having a size of 32x32 and a depth of 1, a coding unit 630 having a size of 16x16 and a depth of 2, and a coding unit 640 having a size of 8x8 and a depth of 3 exist. The coding unit 640 having the size of 8x8 and the depth of 3 is a minimum coding unit.

The prediction unit and the partitions of a coding unit are arranged along the horizontal axis according to each depth. In other words, if the coding unit 610 having the size of 64x64 and the depth of 0 is a prediction unit, the prediction unit may be split into partitions included in the coding unit 610, i.e. a partition 610 having a size of 64x64, partitions 612 having the size of 64x32, or partitions 614 having the size of 32x64. Since the coding unit 610 having the size of 64x64 is not the minimum coding unit, partitions 616 having the size of 32x32 are not set.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, and partitions 624 having a size of 16x32. Since the coding unit 620 having the size of 32x32 is not the minimum coding unit, partitions 626 having a size of 16x16 are not set.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, and partitions 634 having a size of 8x16. Since the coding unit 630 having the size of 16x16 30 is not the minimum coding unit, partitions 636 having a size of 8x8 are not set.

Finally, the coding unit 640 having the size of 8x8 and the depth of 3 is the minimum coding unit and a coding unit of a lowermost depth. A prediction unit of the coding unit 640 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

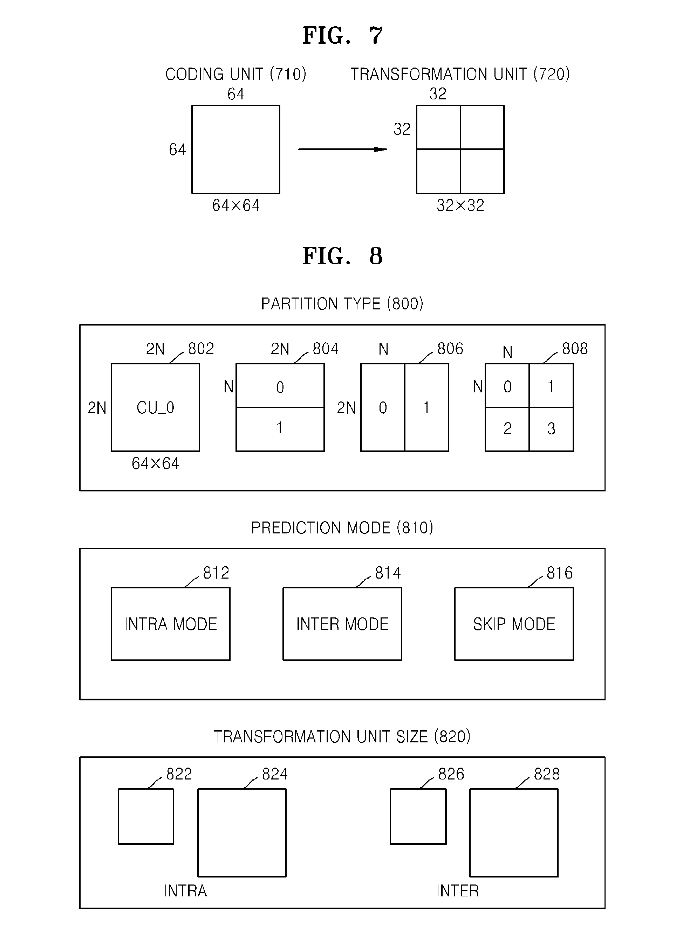

FIG. 7 is a diagram for describing a relationship between a coding unit 710 and transformation units 720, according to an embodiment of the present invention.

The video encoding apparatus 10 according to an embodiment encodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding apparatus 10 according to an embodiment, if a size of the current coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having a least error may be selected.

FIG. 8 is a diagram for describing encoding information of coding units corresponding to a coded depth, according to an embodiment of the present invention.

The output unit 13 of the video encoding apparatus 10 according to an embodiment may encode and transmit information 800 about a partition type, information 810 about a prediction mode, and information 820 about a size of a transformation unit for each coding unit corresponding to a coded depth, as information about an encoding mode.

The information 800 about the partition type indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. In this regard, the information 800 about the partition type of the current coding unit is set to indicate one of the partition 804 having a size of 2NxN, and the partition 806 having a size of Nx2N. However, the information 800 about the partition type of the current coding unit may include the partition 808 having a size of NxN when the current coding unit CU_0 having the size of 2Nx2N is a minimum coding unit.

The information 810 about the prediction mode indicates a prediction mode of each partition. For example, the information 810 about the prediction mode may indicate a mode of prediction encoding performed on a partition indicated by the information 800, i.e., an intra mode 812, an inter mode 814, or a skip mode 816.

Also, the information 820 about the size of the transformation unit indicates a transformation unit to be based on when transformation is performed on a current coding unit. For example, the transformation unit may be a first intra transformation unit 822, a second intra transformation unit 824, a first inter transformation unit 826, or a second intra transformation unit 828.

A decoding side may extract and use the information 800 about the partition type, the information 810 about the prediction mode, and the information 820 about the size of the transformation unit for decoding according to each deeper coding unit.

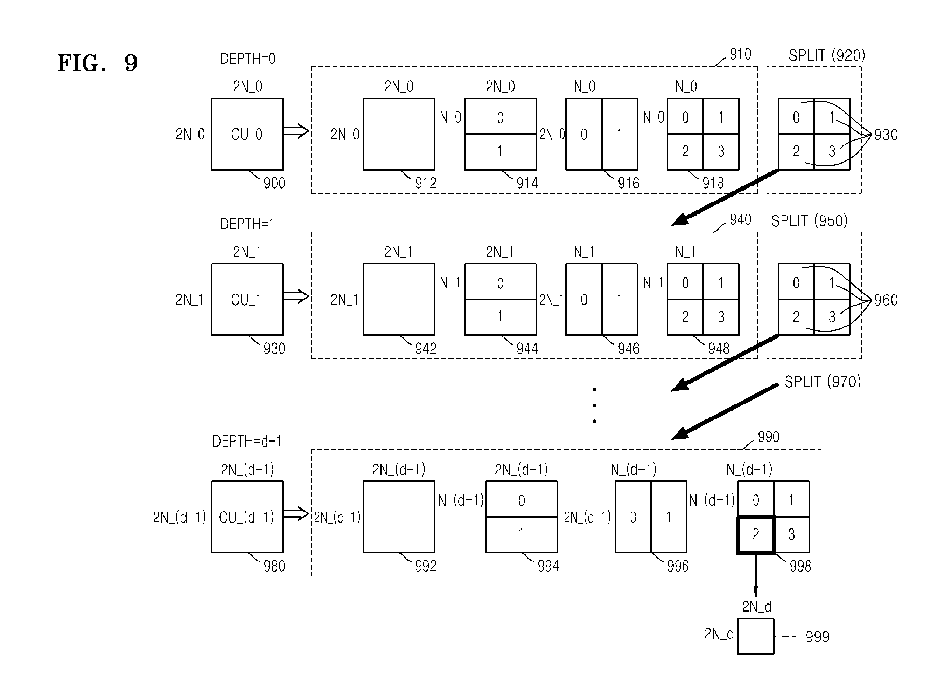

FIG. 9 is a diagram of deeper coding units according to depths according to an embodiment of the present invention.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 9 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding has to be repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode may be performed only on the partition having the size of 2N_0x2N_0.

If an encoding error is smallest in one of the partition types 912 through 916 having the sizes of 2N_0x2N_0, 2N_0xN_0, and N_0x2N_0, the prediction unit 910 may be no longer split to a lower depth.

If the encoding error is the smallest in the partition type 918 having the size of N_0xN_0, a depth may be changed from 0 to 1 to split the partition type 918 in operation 920, and encoding may be repeatedly performed on coding units 930 having a depth of 2 and a size of N_0xN_0 to search for a least encoding error.

A prediction unit 940 for prediction encoding the coding unit 930 having a depth of 1 and a size of 2N_1x2N_1 (=N_0xN_0) may include partitions of a partition type 942 having a size of 2N_1x2N_1, a partition type 944 having a size of 2N_1 xN_1, a partition type 946 having a size of N_1x2N_1, and a partition type 948 having a size of N_1 xN_1.

If an encoding error is the smallest in the partition type 948 having the size of N_1XN_1 rather than in the partition types 942, 944, and 946 having the sizes of 2N_1x2N_1, 2N_1xN_1, and N_1x2N_1, a depth may be changed from 1 to 2 to split the partition type 948 in operation 950, and encoding may be repeatedly performed on coding units 960, which have a depth of 2 and a size of N_2xN_2 to search for a least encoding error.

When a maximum depth is d-1, split information according to each depth may be set until a depth becomes d-1, and split information may be set until a depth becomes d-2. In other words, when encoding is performed until the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1). Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types 992 through 998 to search for a partition type having a least encoding error.

Even when the partition type 998 having the size of N_(d-1)xN_(d-1) has the least encoding error, since the maximum depth is d-1, a coding unit CU_(d-1) having a depth of d-1 may be no longer split to a lower depth, a coded depth for a current maximum coding unit 900 may be determined to be d-1, and a partition type of the current maximum coding unit 900 may be determined to be N_(d-1)xN_(d-1). Also, since the maximum depth is d-1, split information for a coding unit 952 having a depth of d-1 is not set.

Since the coding unit 900 having a depth of 0 and the size of 2N_0x2N_0 and the coding unit 930 having a depth of 1 and the size of 2N_1x2N_1 are not minimum coding units, the prediction unit 910 of the coding unit 900 having the size of 2N_0x2N_0 may not include the partition type having the size of N_0xN_0, and the prediction unit 940 of the coding unit 930 having the size of 2N_1x2N_1 may not include the partition type having the size of N_1xN_1.

However, the prediction unit 990 of the coding unit 980 having a depth of d-1 that is the minimum coding unit may include the partition type 998 having the size of N_(d-1)xN_(d-1),

A data unit 999 may be referred to as a 'minimum unit' for the current maximum coding unit. A minimum unit according to an embodiment may be a rectangular data unit obtained by splitting a minimum coding unit having a lowermost coded depth by 4.

The coded depth, the partition type of the prediction unit, and the prediction mode may be encoded and transmitted as information about an encoding mode. Also, since a coding unit has to be split from a depth of 0 to the coded depth, only split information of the coded depth has to be set to 0, and split information of depths excluding the coded depth has to be set to 1.

A decoding side may extract and use the information about the coded depth and the prediction unit of the coding unit 900 to decode the coding unit 912. The decoding side may determine a depth, in which split information is 0, as a coded depth by using split information according to depths, and may use information about an encoding mode of the corresponding depth for decoding.

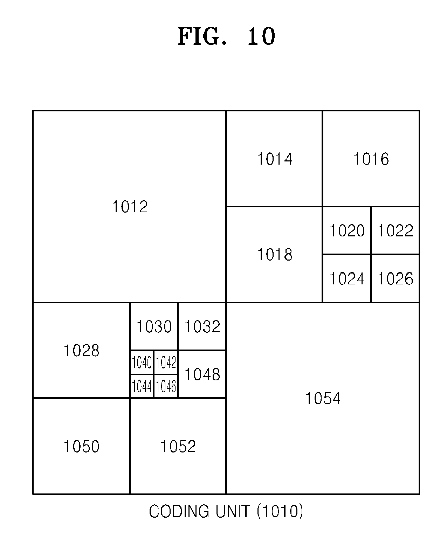

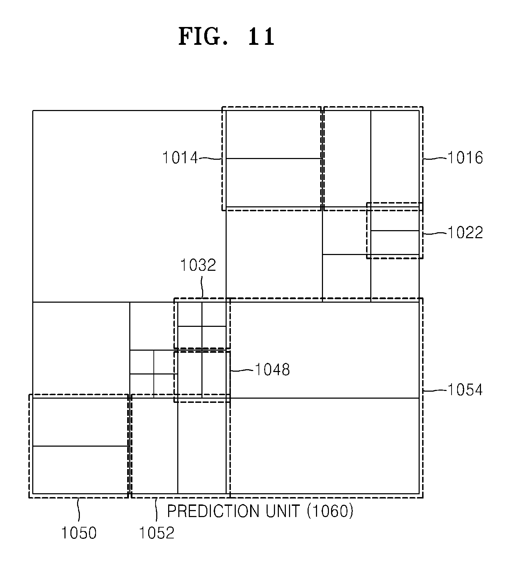

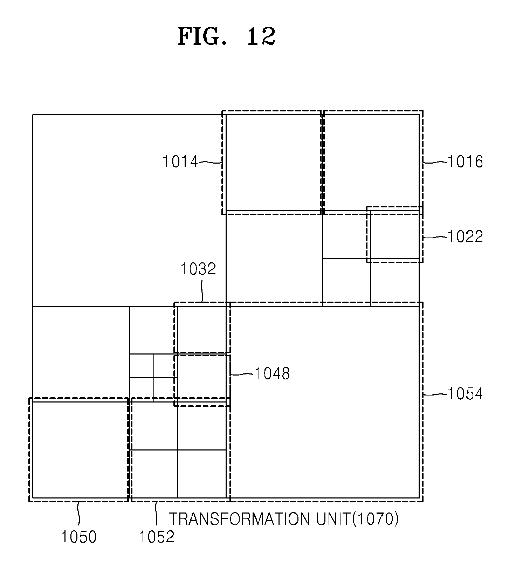

FIGS. 10 through 12 are diagrams for describing a relationship between coding units 1010, prediction units 1060, and frequency transformation units 1070, according to an embodiment of the present invention.

The coding units 1010 are coding units corresponding to coded depths determined by using an edge pixel included in a down-sampled picture by the preprocessor 11 according to the above-described embodiment, in a maximum coding unit. The prediction units 1060 are partitions of prediction units of each of the coding units 1010. The transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some partitions 1014, 1016, 1022, 1032, 1048, 1050, 1052, and 1054 are obtained by splitting the coding units. In other words, partition types in the partitions 1014, 1022, 1050, and 1054 have a size of 2NxN, partition types in the partitions 1016, 1048, and 1052 have a size of Nx2N, and a partition type of the partition 1032 has a size of NxN. The partition type having the size of NxN may be set only when the coding unit 1032 is a minimum coding unit. Prediction units and partitions of the coding units 1010 are smaller than or equal to each coding unit.

Transformation or inverse transformation is performed on image data of the transformation unit 1052 in the transformation units 1070 in a data unit that is smaller than the transformation unit 1052. Also, the transformation units 1014, 1016, 1022, 1032, 1048, 1050, 1052, and 1054 in the transformation units 1070 are different from those in the prediction units 1060 in terms of sizes or shapes. In other words, the video encoding/decoding processes according to an embodiment may perform intra prediction/motion estimation/motion compensation, and transformation/inverse transformation individually on a data unit even in the same coding unit.

Encoding information may include split information about a coding unit, information about a partition type, information about a prediction mode, and information about a size of a transformation unit. Table 1 shows the encoding information according to an embodiment.

Table 1

| Split Information 0 (Encoding on Coding Unit having Size of 2Nx2N and Current Depth of d) | | | | | Split Information 1 |
|---|---|---|---|---|---|
| Prediction Mode | Partition Type | | Size of Transformation Unit | | |
| Intra Inter Skip (Only 2Nx2N) | Symmetrical Partition Type | Asymmetrical Partition Type | Split Information 0 of Transformation Unit | Split Information 1 of Transformation Unit | Repeatedly Encode Coding Units having Lower Depth of d+1 |
| | 2Nx2N 2NxN Nx2N NxN | 2NxnU 2NxnD nLx2N nRx2N | 2Nx2N | NxN (Symmetrical Partition Type) N/2xN/2 (Asymmetrical Partition Type) | |

The output unit 13 of the video encoding apparatus 10 may output the encoding information about the coding units having the tree structure. A decoding side may extract the encoding information about the coding units having the tree structure from a received bitstream.

Split information indicates whether a current coding unit is split into coding units of a lower depth. If split information of a current depth d is 0, a depth, in which a current coding unit is no longer split to a lower depth, is a coded depth, and thus information about a partition type, a prediction mode, and a size of a transformation unit may be defined for the coded depth. If the current coding unit is further split according to the split information, encoding has to be independently performed on four split coding units of a lower depth.

A prediction mode may be one of an intra mode, an inter mode, and a skip mode. The intra mode and the inter mode may be defined in all partition types, and the skip mode may be defined only in a partition type having a size of 2Nx2N.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD are respectively obtained by splitting the height of the prediction unit in 1:3 and 3:1, and the asymmetrical partition types having the sizes of nLx2N and nRx2N are respectively obtained by splitting the width of the prediction unit in 1:3 and 3:1. The symmetrical partition type having the size of NxN may be set only in the minimum coding unit.

The size of the transformation unit may be set to be two types in the intra mode and two types in the inter mode. In other words, if split information of the transformation unit is 0, the size of the transformation unit is set to 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be set to NxN, and if the partition type of the current coding unit is an asymmetrical partition type, the size of the transformation unit may be set to N/2xN/2.

The encoding information about coding units having a tree structure according to an embodiment may be assigned to at least one of a coding unit corresponding to a coded depth, a prediction unit, and a minimum unit. The coding unit corresponding to the coded depth may include at least one of a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth may be determined by using encoding information of a data unit, and thus a distribution of coded depths in a maximum coding unit may be determined.

Accordingly, if a current coding unit is predicted by referring to adjacent data units, encoding information of data units in deeper coding units adjacent to the current coding unit may be directly referred to and used.

Alternatively, if a current coding unit is prediction encoded by referring to adjacent data units, data units adjacent to the current coding unit in deeper coding units may be searched for by using encoded information of the data units, and the searched adjacent coding units may be referred to for prediction encoding the current coding unit.

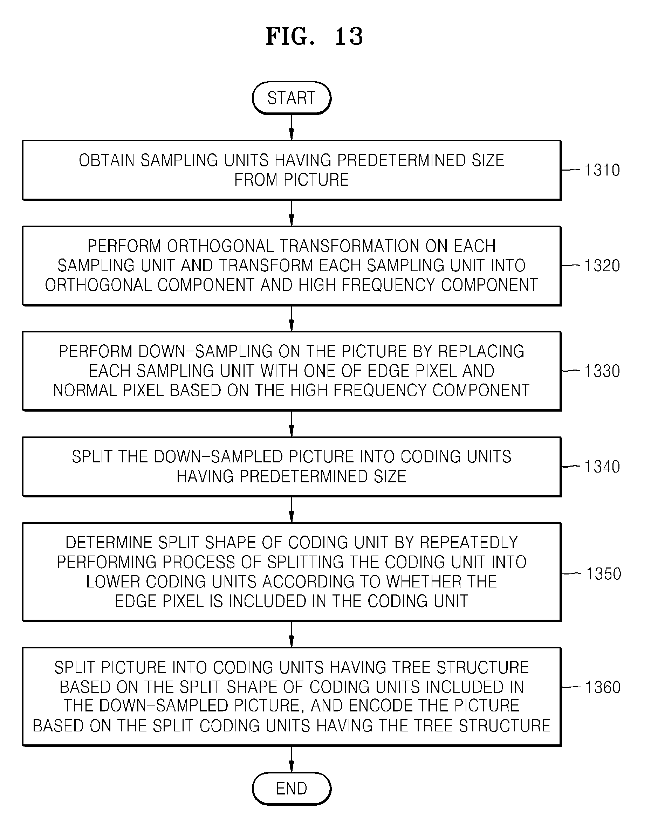

FIG. 13 is a flowchart illustrating a video encoding method, according to an embodiment of the present invention.

Referring to FIG. 13, in operation S1310, the orthogonal transformer 14 obtains sampling units having a predetermined size from a picture. In operation S1320, the orthogonal transformer 14 performs orthogonal transformation on each sampling unit and transforms each sampling unit into an orthogonal component and a high frequency component. As described above, the orthogonal transformer 14 performs Hadamard transformation and obtains the high frequency component from the sampling units having the predetermined size.

In operation S1330, the down-sampler 15 performs down-sampling on the picture by replacing each sampling unit with one of an edge pixel and a normal pixel based on the high frequency component. The down-sampler 15 according to an embodiment compares an absolute value of a maximum value among high frequency components and the threshold th and replaces a sampling unit with a single normal pixel when an absolute value of a maximum high frequency component is smaller than the threshold th, and replaces the sampling unit with a single edge pixel when the absolute value of the maximum high frequency component is greater than the threshold th. The down-sampler 15 according to another embodiment replaces a sampling unit with a single normal pixel when a maximum value of absolute values of differences between high frequency components obtained from sampling unit of a current picture and high frequency components obtained from a sampling unit of a corresponding previous picture is smaller than the threshold th, and replaces the sampling unit with a single edge pixel when the maximum value is greater than the threshold th.

In operation S1340, the split shape determiner 16 determines a down-sampled picture into maximum coding units having a predetermined size. In operation S1350, the split shape determiner 16 determines a split shape of a maximum coding unit by repeatedly performing a process of splitting the maximum coding unit into lower coding units according to whether the edge pixel is included in the maximum coding unit. In operation S1360, the split shape determiner 16 splits an original picture into coding units having a tree structure based on the split shape of coding units included in the down-sampled picture, and encodes the picture based on the split coding units having the tree structure.

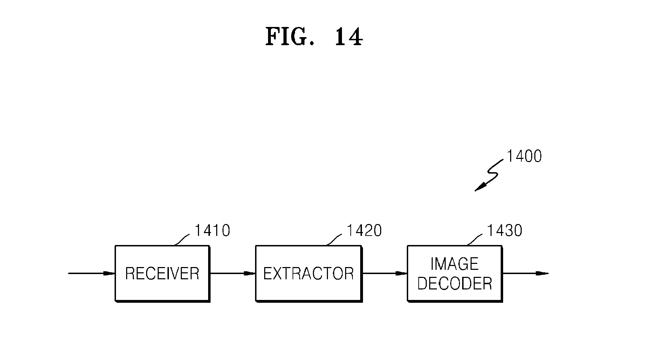

FIG. 14 is a block diagram of a video decoding apparatus 1400 according to an embodiment of the present invention.

Referring to FIG. 14, the video decoding apparatus 1400 includes a receiver 1410, an extractor 1420, and an image decoder 1430.

The receiver 1410 receives and parses a bitstream of an encoded video. The extractor 1420 extracts encoded image data for each coding unit from the parsed bitstream, wherein the coding units have a tree structure according to each maximum coding unit, and outputs the extracted image data to the image decoder 1430. The extractor 1420 may extract coding unit structure information about a size and variable depth of a coding unit of a current picture and information about a coded depth and coding mode from at least one of a header, SPS, and PPS with respect to the current picture.

The extractor 1420 may extract information about at least one of a maximum size and a minimum size of a coding unit allowable for coding units having a current tree structure and information about a variable depth for each data unit of a sequence, a picture, a slice or a GOP from encoding information according to an embodiment. The image decoder 1430 may determine the maximum size and the minimum size of the coding unit allowable for coding units having the current tree structure for each data unit of the sequence, the picture, the slice or the GOP by using at least two pieces of information among the information about the variable depth, the information about the maximum size of the coding unit, and the information about the minimum size of the coding unit that are included in the information about the encoding mode.

At least two pieces of information among information about the variable depth, information about the maximum size of the coding unit, and information about the minimum size of the coding unit that are determined for each picture, slice, or GOP may be extracted from the coding information according to an embodiment. A maximum size and a minimum size of a coding unit allowable in a current data unit may be determined based on read information. The extracted information about the coded depth and the encoding mode is output to the image decoder 1430. In other words, the image data in a bit stream is split into the maximum coding unit so that the image decoder 1430 decodes the image data for each maximum coding unit.

The information about the coded depth and the encoding mode according to the maximum coding unit may be set for information about at least one coded depth, and information about an encoding mode according to each coded depth may include information about a partition type of a corresponding coding unit corresponding to the coded depth, a prediction mode, and a size of a transformation unit. Also, split information according to depths may be extracted as the information about the coded depth.

The image decoder 1430 may read information about transformation indices from the coding information from the information about the encoding mode extracted from the parsed bitstream. The image decoder 1430 may configure a transformation unit of a current coding unit based on information about the transformation index extracted by the extractor 1420, perform inverse transformation on the current coding unit based on the transformation unit, and decode encoded data. As a result of decoding the coding units, a current picture may be restored.

The information about the coded depth and the encoding mode according to each maximum coding unit extracted by the extractor 1420 is information about a coded depth and an encoding mode determined to generate at least encoding error when an encoder, such as the video encoding apparatus 10, repeatedly performs encoding for each deeper coding unit according to depths according to each maximum coding unit. Accordingly, the video decoding apparatus 20 may restore an image by decoding the image data according to an encoding mode that generates the least encoding error.

Since encoding information about the coded depth and the encoding mode according to an embodiment may be assigned to a predetermined data unit from among a corresponding coding unit, a prediction unit, and a minimum unit, the extractor 1420 may extract the information about the coded depth and the encoding mode according to the predetermined data units. When the information about the coded depth of the corresponding maximum coding unit and the encoding mode is recorded according to the predetermined data units, the predetermined data units having the same information about the coded depth and the encoding mode may be inferred to be the data units included in the same maximum coding unit.

The image decoder 1430 restores the current picture by decoding the image data in each maximum coding unit based on the information about the coded depth and the encoding mode according to the maximum coding units. In other words, the image decoder 1430 may decode the encoded image data based on the extracted information about the partition type, the prediction mode, and the transformation unit for each coding unit from among the coding units having the tree structure included in each maximum coding unit. A decoding process may include prediction including intra prediction and motion compensation, and inverse transformation.

The image decoder 1430 may perform intra prediction or motion compensation according to a partition and a prediction mode of each coding unit, based on the information about the partition type and the prediction mode of the prediction unit of the coding unit according to coded depths.

Also, the image decoder 1430 may perform inverse transformation according to each transformation unit in the coding unit, based on the information about the size of the transformation unit of the coding unit according to coded depths, so as to perform the inverse transformation according to maximum coding units.

The image decoder 1430 may determine a coded depth of a current maximum coding unit by using split information according to depths. If the split information indicates that image data is no longer split in the current depth, the current depth is a coded depth. Accordingly, the image decoder 1430 may decode encoded data of the current depth by using the information about the partition type of the prediction unit, the prediction mode, and the size of the transformation unit for image data of the current maximum coding unit.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the image decoder 1430 in the same encoding mode.

The video decoding apparatus 1400 may obtain information about a split shape of a maximum coding unit determined based on an edge pixel included in a down-sampled picture during the above-described encoding process and determine a split shape of a maximum coding unit for decoding of a current picture that is to be decoded.

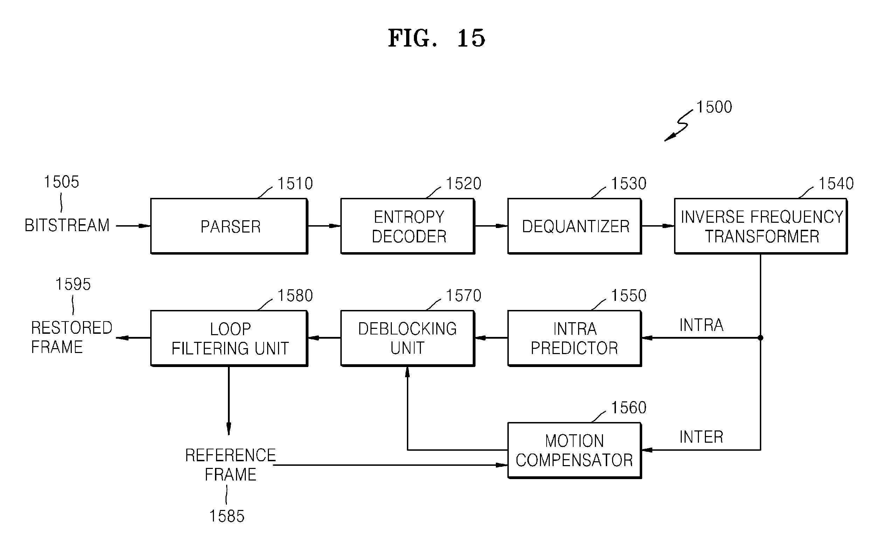

FIG. 15 is a block diagram of a video decoding apparatus 1500 corresponding to the image decoder 1430 of FIG. 14 according to an embodiment of the present invention.

A parser 1510 parses encoded image data to be decoded and information about encoding required for decoding from a bitstream 1505. Information about a split shape of a maximum coding unit determined based on an edge pixel included in a down-sampled picture during the above-described encoding process may be used to determine a split shape of a maximum coding unit for decoding of a current picture that is to be decoded.

The encoded image data is output as inverse quantized data through an entropy decoder 1520 and an inverse quantizer 1530, and the inverse quantized data is restored to image data in a spatial domain through an inverse frequency transformer 1540.

An intra predictor 1550 performs intra prediction on coding units in an intra mode with respect to the image data in the spatial domain, and a motion compensator 1560 performs motion compensation on coding units in an inter mode by using a reference frame 585.

The data in the spatial domain, which passed through the intra predictor 1550 and the motion compensator 1560, may be output as a restored frame 1595 after being post-processed through a deblocking unit 1570 and a loop filtering unit 1580. Also, the data, which is post-processed through the deblocking unit 1570 and the loop filtering unit 1580, may be output as the reference frame 1585.

In order for the image decoder 400 to be applied in the video decoding apparatus 1400 according to an embodiment, all elements of the image decoder 400, i.e., the parser 1510, the entropy decoder 1520, the inverse quantizer 1530, the inverse frequency transformer 1540, the intra predictor 1550, the motion compensator 1560, the deblocking unit 1570, and the loop filtering unit 1580 have to perform operations based on coding units having a tree structure for each maximum coding unit.

Specifically, the intra predictor 1550 and the motion compensator 11560 have to determine partitions and a prediction mode for each of the coding units having the tree structure, and the inverse frequency transformer 1540 has to determine a size of a transformation unit for each coding unit.

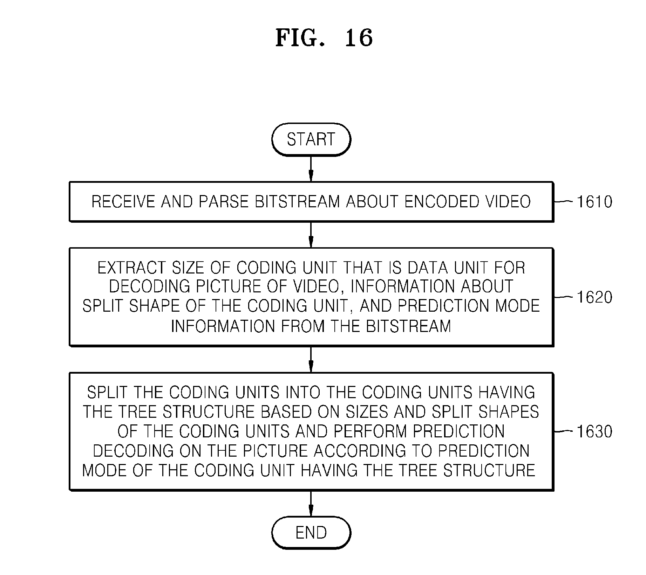

FIG. 16 is a flowchart illustrating a video decoding method, according to an embodiment of the present invention.

Referring to FIG. 16, in operation S1610, the receiver 1410 receives and parses a bitstream about an encoded video. In operation S1620, the extractor 1420 extracts a size of a coding unit that is a data unit for decoding a picture of video, information about a split shape of the coding unit, and prediction mode information from the bitstream. As described above, split shapes of coding units having a tree structure is obtained during an encoding process by replacing a sampling unit with one of an edge pixel and a normal pixel and obtaining a down-sampled picture based on a maximum high frequency component obtained through orthogonal transformation on the sampling unit having a predetermined size and repeatedly performing a process of splitting the down-sampled picture into the coding units and the coding units into lower coding units according to whether the edge pixel is included in the coding units.

In operation S1630, the image decoder 1430 splits the coding units into the coding units having the tree structure based on sizes and split shapes of the coding units and performs prediction decoding on the picture according to a prediction mode of the coding unit having the tree structure.

The embodiments of according to the present invention may be written as computer programs and may be implemented in general-use digital computers that execute the programs by using a computer-readable recording medium. Examples of the computer-readable recording medium include magnetic storage media (e.g., a read-only memory (ROM), a floppy disc, and a hard disc), optically readable media (e.g., a compact disc-read only memory (CD-ROM) and a digital versatile disc (DVD)), and carrier waves (such as data transmission through the Internet).

While the present invention has been particularly shown and described with reference to exemplary embodiments thereof, it will be understood by those of ordinary skill in the art that various changes in form and details may be made therein without departing from the spirit and scope of the invention as defined by the appended claims. The exemplary embodiments should be considered in a descriptive sense only and not for purposes of limitation. Therefore, the scope of the invention is defined not by the detailed description of the invention but by the appended claims, and all differences within the scope will be construed as being included in the present invention.

**Claims**

1. A video encoding method comprising:

   obtaining sampling units having a predetermined size from a picture;
   performing orthogonal transformation on each sampling unit and transforming each sampling unit into an orthogonal component and a high frequency component;
   performing down-sampling on the picture by replacing each sampling unit with one of an edge pixel and a normal pixel based on the high frequency component;
   splitting the down-sampled picture into coding units having a predetermined size;
   determining a split shape of the coding unit by repeatedly performing a process of splitting the coding unit into lower coding units according to whether the edge pixel is included in the coding unit; and
   splitting the picture into coding units having a tree structure based on the split shape of the coding unit included in the down-sampled picture, and encoding the picture based on the split coding units having the tree structure.

2. The video encoding method of claim 1, wherein the transforming comprises: transforming each sampling unit into the orthogonal component and the high frequency component by performing Hadamard transformation on each sampling unit.

3. The video encoding method of claim 1, wherein the performing of down-sampling on the picture comprises: when a maximum value of the high frequency component is smaller than a predetermined threshold, replacing the sampling unit with a single normal pixel, and, when the maximum value of the high frequency component is greater than the predetermined threshold, replacing the sampling unit with a single edge pixel.

4. The video encoding method of claim 1, wherein the performing of down-sampling on the picture comprises:

   performing orthogonal transformation on a sampling unit of a previous picture corresponding to the sampling unit and obtaining high frequency components of the sampling unit of the previous picture; and
   when a maximum value of absolute values of differences between high frequency components obtained from a sampling unit of a current picture and the high frequency components obtained from the corresponding sampling unit of the previous picture is smaller than a predetermined threshold, replacing the sampling unit with a single normal pixel, and, when the maximum value is greater than the predetermined threshold, replacing the sampling unit with a single edge pixel.

5. The video encoding method of claim 3 or 4, wherein the predetermined threshold is a value determined based on a quantization parameter.

**6.** The video encoding method of claim 1, wherein the determining of the split shape comprises: when the edge pixel is present in the coding unit, splitting the coding unit into lower coding units,
wherein the splitting of the coding unit into the lower coding units is repeatedly performed until the edge pixel is housed in a previously determined minimum coding unit.

**7.** The video encoding method of claim 1, wherein the encoding of the picture comprises: enlarging the split shape of the coding unit included in the down-sampled picture based on a ratio of a size of the down-sampled picture and a size of the picture and splitting the picture into the coding units having the tree structure.

**8.** A video encoding apparatus comprising:

an orthogonal transformer for obtaining sampling units having a predetermined size from a picture, performing orthogonal transformation on each sampling unit, and transforming each sampling unit into an orthogonal component and a high frequency component;
a down-sampler for performing down-sampling on the picture by replacing each sampling unit with one of an edge pixel and a normal pixel based on the high frequency component;
a split shape determiner for splitting the down-sampled picture into coding units having a predetermined size, and determining a split shape of the coding unit by repeatedly performing a process of splitting the coding unit into lower coding units according to whether the edge pixel is included in the coding unit; and
an image encoder for splitting the picture into coding units having a tree structure based on the split shape of the coding unit included in the down-sampled picture, and encoding the picture based on the split coding units having the tree structure.

**9.** The video encoding apparatus of claim 8, wherein the orthogonal transformer transforms each sampling unit into the orthogonal component and the high frequency component by performing Hadamard transformation on each sampling unit.

**10.** The video encoding apparatus of claim 8, wherein the down-sampler, when a maximum value of the high frequency component is smaller than a predetermined threshold, replaces the sampling unit with a single normal pixel, and, when the maximum value of the high frequency component is greater than the predetermined threshold, replaces the sampling unit with a single edge pixel.

**11.** The video encoding apparatus of claim 8, wherein the down-sampler performs orthogonal transformation on a sampling unit of a previous picture corresponding to the sampling unit and obtaining high frequency components of the sampling unit of the previous picture, and, when a maximum value of absolute values of differences between high frequency components obtained from a sampling unit of a current picture and the high frequency components obtained from the corresponding sampling unit of the previous picture is smaller than a predetermined threshold, replaces the sampling unit with a single normal pixel, and, when the maximum value is greater than the predetermined threshold, replaces the sampling unit with a single edge pixel.

**12.** The video encoding apparatus of claim 8, wherein the split shape determiner, when the edge pixel is present in the coding unit, splits the coding unit into lower coding units, and repeatedly performs a splitting process until the edge pixel is housed in a previously determined minimum coding unit.

**13.** The video encoding apparatus of claim 8, wherein the image encoder enlarges the split shape of the coding unit included in the down-sampled picture based on a ratio of a size of the down-sampled picture and a size of the picture and splits the picture into the coding units having the tree structure.

**14.** A video decoding method comprising:

receiving and parsing a bitstream with respect to an encoded video;
extracting a size of a coding unit that is a data unit for decoding a picture of the video, information about a split shape of the coding unit, and prediction mode information from the bitstream; and
splitting the coding unit into coding unit having a tree structure based on the size of the coding unit and the split shape and performing prediction decoding on the picture according to a prediction mode of the coding units having the tree structure,
wherein the split shape of the coding units having the tree structure is obtained by replacing a sampling unit having a predetermined size with one of an edge pixel and a normal pixel based on a maximum high frequency component obtained through orthogonal transformation on the sampling unit and obtaining a down-sampled picture, and repeatedly performing a process of splitting the down-sampled picture into the coding units and splitting the coding unit into lower coding units according to whether the edge pixel is present in the coding unit.

**15.** A video decoding apparatus comprising:

a receiver for receiving and parsing a bitstream with respect to an encoded video;
an extractor for extracting a size of a coding unit that is a data unit for decoding a picture of the video, information about a split shape of the coding unit, and prediction mode information from the bitstream; and
an image decoder for splitting the coding unit into coding unit having a tree structure based on the size of the coding unit and the split shape and performing prediction decoding on the picture according to a prediction mode of the coding units having the tree structure,
wherein the split shape of the coding units having the tree structure is obtained by replacing a sampling unit having a predetermined size with one of an edge pixel and a normal pixel based on a maximum high frequency component obtained through orthogonal transformation on the sampling unit and obtaining a down-sampled picture, and repeatedly performing a process of splitting the down-sampled picture into the coding units and splitting the coding unit into lower coding units according to whether the edge pixel is present in the coding unit.

# FIG. 1A

```
            11                  12                  13
     ┌──────────────┐    ┌──────────────┐    ┌──────────────┐
───→ │ PREPROCESSOR │ ─→ │    IMAGE     │ ─→ │ OUTPUT UNIT  │ ───→
     └──────────────┘    │   ENCODER    │    └──────────────┘
                         └──────────────┘
```

10

# FIG. 1B

```
        11
  ┌─ ─ ─ ─ ─ ─ ─ ─ ─ ─ ─ ─ ─ ─ ─ ─ ─ ─ ─ ─ ─ ─ ─ ─ ─┐
  │      14               15               16        │
  │  ┌──────────┐    ┌──────────┐    ┌──────────────┐│      SPLIT
──┼─→│ORTHOGONAL│ ─→ │  DOWN-   │ ─→ │ SPLIT SHAPE  ││ ──→  INFORMATION
  │  │TRANSFORMER│   │ SAMPLER  │    │  DETERMINER  ││
  │  └──────────┘    └──────────┘    └──────────────┘│
  └─ ─ ─ ─ ─ ─ ─ ─ ─ ─ ─ ─ ─ ─ ─ ─ ─ ─ ─ ─ ─ ─ ─ ─ ─┘
```

FIG. 2A

2×2 DHT

| h0 | h1 |
|----|----|
| h2 | h3 |

21

20

| F(0,0) | F(1,0) |
|--------|--------|
| F(0,1) | F(1,1) |

22

if max F(u,v)<th → NORMAL PIXEL
(u,v)≠(0,0)

if max F(u,v)≥th → EDGE PIXEL
(u,v)≠(0,0)

EP 2 840 790 A1

# FIG. 2B

PREVIOUS PICTURE (25)

CURRENT PICTURE (23)

EP 2 840 790 A1

## FIG. 3A

# FIG. 3B

ORIGINAL PICTURE

DOWN-SAMPLED PICTURE

# FIG. 4

**FIG. 5**

505
CURRENT
FRAME

510
INTRA
PREDICTOR

500

595
REFERENCE
FRAME

520
MOTION
ESTIMATOR

530
FREQUENCY
TRANSFORMER

590
LOOP
FILTERING UNIT

525
MOTION
COMPENSATOR

540
QUANTIZER

550
ENTROPY
ENCODER

555
BITSTREAM

580
DEBLOCKING
UNIT

570
INVERSE FREQUENCY
TRANSFORMER

560
DEQUANTIZER

# FIG. 6

MAXIMUM CODING UNIT

MAXIMUM HEIGHT AND WIDTH OF CODING UNIT = 64    MAXIMUM DEPTH=3

600

64 / 610

64

64×64

64 / 612

32

64×32

32 / 614

64

32×64

32 / 616

32

32×32

PREDICTION UNIT/ PARTITION

32 / 620

32

32×32

32 / 622

16

32×16

16 / 624

32

16×32

16 / 626

16

16×16

16 / 630

16

16×16

16 / 632

8

16×8

8 / 634

16

8×16

8 / 636

8

8×8

MINIMUM CODING UNIT

8 / 640

8

8×8

8 / 642

4

8×4

4 / 644

8

4×8

4 / 646

4

4×4

CODING UNITS ACCORDING TO DEPTHS

# FIG. 7

CODING UNIT (710)　　　TRANSFORMATION UNIT (720)

64

64　64×64

32

32　32×32

# FIG. 8

PARTITION TYPE (800)

2N　802　2N　804　N　806　N　808

2N　CU_0

64×64

N　0

1

2N　0　1

N　0　1

2　3

PREDICTION MODE (810)

812　814　816

INTRA MODE　INTER MODE　SKIP MODE

TRANSFORMATION UNIT SIZE (820)

822　824　826　828

INTRA　INTER

**FIG. 9**

EP 2 840 790 A1

DEPTH=0

SPLIT (920)

910

| $2N\_0$ | | $2N\_0$ | | $2N\_0$ | | $N\_0$ | | $N\_0$ | |
|---|---|---|---|---|---|---|---|---|---|

$2N\_0$ | CU_0 | → | $2N\_0$ | | $N\_0$ | 0 / 1 | $2N\_0$ | 0 | 1 | $N\_0$ | 0 | 1 / 2 | 3

900 · 912 · 914 · 916 · 918

0 1 / 2 3 → 930

DEPTH=1

SPLIT (950)

940

$2N\_1$ | CU_1 | → $2N\_1$ | | $N\_1$ 0/1 | $2N\_1$ 0 1 | $N\_1$ 0 1 / 2 3

930 · 942 · 944 · 946 · 948

0 1 / 2 3 → 960

SPLIT (970)

DEPTH=d-1

990

$2N\_(d-1)$ | CU_(d-1) | → $2N\_(d-1)$ | | $N\_(d-1)$ 0/1 | $2N\_(d-1)$ 0 1 | $N\_(d-1)$ 0 1 / **2** 3

980 · 992 · 994 · 996 · 998

$2N\_d$

$2N\_d$ | | — 999

# FIG. 10

CODING UNIT (1010)

## FIG. 11

1014 — 1016

1022

1032

1048

1054

PREDICTION UNIT (1060)

1050  1052

# FIG. 12

1014—
1016
1022
1032
1048
1054
1050
1052
TRANSFORMATION UNIT(1070)

# FIG. 13

START

OBTAIN SAMPLING UNITS HAVING PREDETERMINED SIZE FROM PICTURE — 1310

PERFORM ORTHOGONAL TRANSFORMATION ON EACH SAMPLING UNIT AND TRANSFORM EACH SAMPLING UNIT INTO ORTHOGONAL COMPONENT AND HIGH FREQUENCY COMPONENT — 1320

PERFORM DOWN-SAMPLING ON THE PICTURE BY REPLACING EACH SAMPLING UNIT WITH ONE OF EDGE PIXEL AND NORMAL PIXEL BASED ON THE HIGH FREQUENCY COMPONENT — 1330

SPLIT THE DOWN-SAMPLED PICTURE INTO CODING UNITS HAVING PREDETERMINED SIZE — 1340

DETERMINE SPLIT SHAPE OF CODING UNIT BY REPEATEDLY PERFORMING PROCESS OF SPLITTING THE CODING UNIT INTO LOWER CODING UNITS ACCORDING TO WHETHER THE EDGE PIXEL IS INCLUDED IN THE CODING UNIT — 1350

SPLIT PICTURE INTO CODING UNITS HAVING TREE STRUCTURE BASED ON THE SPLIT SHAPE OF CODING UNITS INCLUDED IN THE DOWN-SAMPLED PICTURE, AND ENCODE THE PICTURE BASED ON THE SPLIT CODING UNITS HAVING THE TREE STRUCTURE — 1360

END

FIG. 14

1400

| 1410 | 1420 | 1430 |
|------|------|------|
| RECEIVER | EXTRACTOR | IMAGE DECODER |

## FIG. 15

# FIG. 16

START

RECEIVE AND PARSE BITSTREAM ABOUT ENCODED VIDEO — 1610

EXTRACT SIZE OF CODING UNIT THAT IS DATA UNIT FOR DECODING PICTURE OF VIDEO, INFORMATION ABOUT SPLIT SHAPE OF THE CODING UNIT, AND PREDICTION MODE INFORMATION FROM THE BITSTREAM — 1620

SPLIT THE CODING UNITS INTO THE CODING UNITS HAVING THE TREE STRUCTURE BASED ON SIZES AND SPLIT SHAPES OF THE CODING UNITS AND PERFORM PREDICTION DECODING ON THE PICTURE ACCORDING TO PREDICTION MODE OF THE CODING UNIT HAVING THE TREE STRUCTURE — 1630

END

## INTERNATIONAL SEARCH REPORT

| | |
|---|---|
| International application No. | |
| **PCT/KR2013/003195** | |

**A. CLASSIFICATION OF SUBJECT MATTER**

*H04N 7/26(2006.01)i*

According to International Patent Classification (IPC) or to both national classification and IPC

**B. FIELDS SEARCHED**

Minimum documentation searched (classification system followed by classification symbols)
H04N 7/26; H03M 7/30; H04N 7/30; H04N 7/32; G06T 9/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: edge, encoding, decoding, downsampling, split

**C. DOCUMENTS CONSIDERED TO BE RELEVANT**

| Category* | Citation of document, with indication, where appropriate, of the relevant passages | Relevant to claim No. |
|---|---|---|
| A | KR 10-2009-0066035 A (ELECTRONICS AND TELECOMMUNICATIONS RESEARCH INSTITUTE) 23 June 2009<br>See paragraphs [0063]-[0065]; claims 1-2; and figures 3-4. | 1-15 |
| A | KR 10-2006-0109642 A (RYU, Chul) 23 October 2006<br>See page 2, line 29 - page 3, line 7; claims 1-2; and figures 5-6. | 1-15 |
| A | KR 10-2006-0067102 A (ELECTRONICS AND TELECOMMUNICATIONS RESEARCH INSTITUTE) 19 June 2006<br>See page 3, lines 44-48; claims 1-4; and figure 1. | 1-15 |
| A | JP 2003-009152 A (MATSUSHITA ELECTRIC IND. CO., LTD.) 10 January 2003<br>See paragraphs [0051]-[0059]; claims 1-2; and figures 2 and 4. | 1-15 |
| A | JP 07-288807 A (OKI ELECTRIC IND. CO., LTD.) 31 October 1995<br>See paragraphs [0014]-[0015]; claims 3-4; and figure 5. | 1-15 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 JULY 2013 (31.07.2013) | **31 JULY 2013 (31.07.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2013/003195**

| Patent document cited in search report | Publication date | Patent family member | Publication date |
|---|---|---|---|
| KR 10-2009-0066035 A | 23/06/2009 | KR 10-0940444 B1 | 10/02/2010 |
| KR 10-2006-0109642 A | 23/10/2006 | KR 10-0689215 B1 | 09/03/2007 |
| KR 10-2006-0067102 A | 19/06/2006 | KR 10-0734828 B1 | 30/07/2007 |
| JP 2003-009152 A | 10/01/2003 | NONE | |
| JP 07-288807A | 31/10/1995 | EP 0679032 A2 | 25/10/1995 |
| | | EP 0679032 B1 | 23/06/2010 |
| | | EP 1538843 A2 | 08/06/2005 |
| | | EP 1538843 A3 | 07/06/2006 |
| | | JP 07-288815 A | 31/10/1995 |
| | | US 2001-0016078 A1 | 23/08/2001 |
| | | US 2002-0051582 A1 | 02/05/2002 |
| | | US 6226414 B1 | 01/05/2001 |
| | | US 6330367 B2 | 11/12/2001 |
| | | US 6477279 B2 | 05/11/2002 |

Form PCT/ISA/210 (patent family annex) (July 2009)